# EUROPEAN PATENT SPECIFICATION

(11) **EP 2 377 492 B1**
(45) Date of publication and mention of the grant of the patent: **23.11.2016**
(21) Application number: 11162984.6
(22) Date of filing: 19.04.2011
(51) Int. Cl.: A61C 19/00, G02B 6/24

(54) **Dental tools for photo-curing of dental fillings**
Dentalwerkzeuge zum Lichthärten von Zahnfüllungen
Outils dentaires pour photo-durcissement de remplissages dentaires

(30) Priority: 19.04.2010 US 763159; 13.04.2011 US 201113086057
(43) Date of publication of application: 19.10.2011
(73) Proprietor: Sapphire Technology, LLC, Denver, CO 80260 (US)
(72) Inventor: Wong, Alan, Federal Heights, CO 80260 (US); Rosen, Howard Steven, Denver, CO 80220 (US)
(74) Representative: Hess, Peter K. G.

(56) References cited:
- US-A- 4 666 406
- US-A- 5 030 093
- US-A- 6 033 223
- US-A- 6 129 723
- US-A1- 2005 221 250
- US-B1- 6 208 788

## Description

### TECHNICAL FIELD

The present invention generally relates to a filling cavities in teeth for the dental arts. More particularly, the present invention is a dental tool having a light transmittable tip portion to accommodate the transmission of light used for photo curing a composite filling while the dental tool tip portion concurrently forms the composite into a desired position simultaneously with the curing light transmitted therethrough the dental tool tip portion to allow the composite curing to be a more controlled process for the desired forming of the composite in relation to the tooth.

### BACKGROUND OF INVENTION

Dental fillings have been commonly used for centuries to fill cavities in teeth. Traditionally, amalgam fillings were commonly used as dental fillings for decades. Amalgam fillings include two or more metals of which one is mercury usually in the range of 40 - 50 percent. While these fillings have been in common use for over 150 years, there are a number of concerns with the use of mercury. Mercury, while generally considered safe for use in dental amalgams, does raise safety concerns both in use and in disposal later. Also, amalgam fillings permanently weaken the brittle crystalline structure of the tooth as the void left by cavity preparation is a permanent removal of integral material strength for the tooth, wherein the amalgam filling does not replace the void with a structurally integral element as the amalgam does not bond with the tooth as it must be retained with features to hold it in the tooth, further amalgam tends to discolor over time as well as being undesirably noticeable or visible, being typically bright silver in color that is in stark contrast to the near white tooth enamel color.

Composite fillings have become more popular replacing amalgam fillings as being much more structurally sound when disposed within the prepared cavity of the tooth, as the composite bonds as against the prepared cavity surfaces, thus helping to restore the structural integrity of the tooth that is lost to the prepared cavity to nearly that of a non cavity tooth. Composite fillings are typically a mixture of acrylic resins and glass-like powders. These fillings can be self hardening, that can require the mixing of substances-increasing the chances for undesirable air pocket porosity in the filling mixture, thus the use of a composite that doesn't require mixing is preferred, however, requiring to be cured with the use of ultraviolet light rays.

Composite fillings can be matched closely with the color of existing teeth, thus desirably rendering them practically invisible in relation to the tooth they are disposed in, further composite fillings are relatively durable and moderate in price. However, negatives are that the placement of the composite fillings into the cavities of the tooth can be difficult in order to eliminate any air pocket porosity or other voids where bacteria might be able to grow, or causing increased tooth hot and cold sensitivity, and further causing weakness in the combined tooth / composite structure.

Other types of tooth fillings include resin-reinforced glass ionomer fillings, porcelain fillings, ceramics, cast gold, and others. These fillings have a variety of problems associated with them and typically are not as commonly used as composites which are becoming the de-facto preferred standard tooth filling.

The process of filling a cavity with a composite filling requires initial preparation of the cavity by removing any decay, then cleaning and completely drying the cavity. Then thin layers of the composite filler material, being approximately one millimeter in thickness, are applied repeatedly with photo curing of each layer prior to the application of the next layer. Once the cavity has been filled with the layers of composite filling polymer, the final layer is shaped to the desired result in substantially conforming to the tooth outer surface, any excess composite material is trimmed and the final result is polished to achieve a smooth transition from the composite filling surface to the native tooth enamel surface.

The layers of composite polymer are each hardened within the prepared tooth cavity through photo-polymerization via the application of external energy, i.e. typically in the form of light. Document US 2005/0221250 A1 relates to a ball lens for transmission of light in use with dental curing light. This process entails the use of a focused beam of light, usually ultraviolet or visible light. Typically, an ultraviolet light beam is focused on the applied layer of composite polymer which activates the resin causing the layer to harden. The composite polymer will shrink some during the photo-polymerization process, being typically about 2-6% which is undesirable in increasing the risk of air pocket porosity in the composite and weakened bonding as between the composite and the prepared tooth cavity. Since voids in the cavity can lead to bacteria growth, or causing increased tooth hot and cold sensitivity, and further causing weakness in the combined tooth / composite structure, thus it is critical to eliminate any such voids.

This results in the need for multiple thin layers of the composite polymer. Also, the polymer must be manipulated into the prepared cavity which is typically difficult to reach and relatively small in volume to ensure that no voids are created in the filling, all of which requires about 50% more time usually in completing the tooth filling with composites as compared to the prior art amalgam fillings that typically require less time to complete the tooth filling. Skilled dentists can ensure that the composite polymer material is properly applied by the feel of the dental tools in applying and manipulating the polymer material in the cavity as well as by visual inspection of the site.

The composite filling material curing light optimally should be positioned as close as possible to the composite material for maximum effectiveness, being a difficult task as the composite material is usually in a hard to reach location. Further, most conventional dental tools are formed from stainless steel or plastic materials and these materials reflect or otherwise interfere with the ultraviolet or visible light rays used to cure the composite filling material that not only causes inappropriate curing, but can also create damage to surrounding tissue in the mouth. Thus, conventional dental tools are typically not able to be used during the actual photo-curing process, resulting in the conventional dental tool and the curing light having to be used independently of one another, resulting in composite forming and curing having to be done as two separate operations, wherein if the dental tool could simultaneously form the composite to the prepared cavity while curing the chance of voids in the composite would be reduced along with less time being required via performing the two operations of forming and curing at the same time.

Another problem that often occurs with the conventional dental tool stainless steel and plastic materials is the adhesion of composite fill material to those materials while trying to form the composite filling material into layers within the prepared cavity. This creates additional problems in attempting to compact and shape the fill material not only during the curing process but even before the cure process. The adhesion of the composite fill material to the tool causes ripping of the material from the cavity and the creation of voids in the fill, often resulting in a greater chance of undesirable air pocket porosity and added time to complete the composite filling of the tooth. Furthermore, an added wetting agent is used to reduce the composite from tending to stick to the dental tool, however, this being undesirable due to the wetting agent interfering with the desired dry prepared cavity for composite bonding and again the added time to deal with the wetting agent as being an added step in the composite tooth filing process.

### SUMMARY OF INVENTION

The present invention provides a dental tool according to the features of claim 1. It can be safely used to manipulate and compact composite polymer fillings not only prior to the curing process but during the curing process. The dental tool does not distort or reflect the transmission of ultraviolet or visible light used to cure the polymers in the cavity. The ability on the dental tool to be used during the photo-curing process enables the composite polymer to be compacted and shaped as the polymer shrinks during curing-being about in the range of 2-6%, thus minimizing the occurrence of voids in the filling and weakened bonding between the composite and the prepared tooth cavity. This increases the efficiency of the process, reducing the time the patient must endure the filling process and minimizing the possibility of bacteria growth and infections.

The dental tool of the present invention uses a tool tip that has at least a portion formed from a material that allows the transmission of ultraviolet wavelengths (200 - 400 nm) and visible wavelengths (380 - 760 nm) through the portion of the tool tip without distortion or reflection of the wavelengths. This reduces the risk of damage to the tooth or surrounding tissue. The material also has a relatively high tensile strength so not to break or shatter during use. The entire tool tip may be formed from this material, or only the working portion of the tool tip may be formed from this material.

The tool tip of the dental tool of the present invention is formed from sapphire. Sapphire has a high degree of transmission of wavelengths in the 150 - 800 nm range. Sapphire also has a relatively high tensile strength (275- 400 MPa) compared to most optical materials, so that it is durable and resistant to shattering or breaking during use. While sapphire (Al₂O₃) is found naturally, it is also able to produced artificially at a reasonable cost. It may also be grown, formed or machined into different shapes as well. The entire tool tip may be formed from sapphire or only the working area of the tool tip may be formed from sapphire.

The dental tool of a preferred embodiment provides a plurality of tool tips that may be attached to a gripping member. This enables the tool tips to be selected for particular uses while other tool tips have other uses. It also enables the tool to be used with opaque tool tips when a photo-curing process is not being used. The tool may also include tool tips on opposing ends of the tool so that the tool can simply be reversed when another tool tip is needed.

The dental tool of a preferred embodiment is used during a photo-curing filling process. For example, the cavity of a tooth is prepared for filling by removing decay and shaping the cavity. Then a thin layer of composite polymer fill material is applied to the cavity by the dental tool (or another dental tool). An light beam of ultraviolet (or visible light) wavelength is then directed to the fill material in the cavity. The dental tool is then used to further compact and shape the fill material as the fill material shrinks during the photo-curing process. The light beam is able to safely pass through the tool tip with only minimal distortion or reflection. Previously, the fill material would shrink and create voids in the fill material as it was unsafe to use existing tools. Then the dentist would attempt to fill the voids with additional fill material and to further shape the fill material. The tool of the present invention enables the fill material to be compacted and shaped while it is curing and shrinking. This provides a much more efficient process and one that minimizes the occurrence of voids in the fill material and provides better bonding between the composite and the prepared tooth cavity.

The tool of the preferred embodiment increases the efficiency of the cavity filling process. The ability to compact, manipulate and shape the fill material before and during the photo-curing process to eliminate voids from occurring while the material shrinks during the curing process greatly speeds up the fill process. Previous tools could not be used during the curing process so that voids would occur when the fill material shrank. The fill material would then have to be applied to the voids and cured, which could result in more voids occurring. This increases the time necessary to fill the cavity, decreasing the productivity of the dentist and increasing the discomfort to the patient. The tool of the present invention decreases the amount of time necessary to fill the cavity by allowing the fill material to be compacted and shaped during the photo-curing process. The ability of the tool to shed the fill material also increases the efficiency since the fill material will remain in place in the cavity.

These and other objects of the present invention will become more readily appreciated and understood from a consideration of the following detailed description of the exemplary embodiment(s) of the present invention when taken together with the accompanying drawings, in which;

### BRIEF DESCRIPTION OF DRAWINGS

Figure 1 is a perspective view of the dental tool of a preferred embodiment of the present invention;
Figure 2 is an expanded detail view of the tool tip of the tool of Figure 1;
Figure 3 is a cross sectional detail view of a dental tool collet chuck;
Figure 4 is a cross sectional detail view 4-4 of Figure 2 being of the dental tool and tip portion adhesive interface;
Figure 5 is a view of the dental tool in use with a hammer head type tool tip configuration;
Figure 6 is a perspective view of the dental tool with an anvil type tool tip configuration;
Figure 7 is a perspective view of parallelepiped type tool tip configuration;
Figure 8 is a perspective view of a cylindrical type tool tip;
Figure 9 is a perspective view of a cylindrical type tool tip with a semi-spherical end portion;
Figure 10 is a perspective view of a cylindrical type tool tip with a wedge end portion;
Figure 11 is a perspective view of a cylindrical type tool tip with a wedge end portion shown in use, wherein the prepared cavity of the tooth is shown in cross section with the composite filler material, layers, and voids or porosity;
Figure 12 is a perspective view of a cylindrical type tool tip with a radius point conical end portion;
Figure 13 is a perspective view of a cylindrical type tool tip with a conical end portion shown in use;
Figure 14 is a perspective view of a cylindrical type tool tip with a skewed wedge end portion;
Figure 15 is a perspective view of a cylindrical type tool tip with a skewed wedge end portion shown in use for a class II-VI tooth restoration;
Figure 16 is a perspective view of a cylindrical type tool tip with an arcuate segment end portion;
Figure 17 is a perspective view of a cylindrical type tool tip with an arcuate segment end portion shown in use for a class II-VI tooth restoration;
Figure 18 is a perspective view of a cylindrical type tool tip with a full-spherical end portion;
Figure 19 is a perspective view of a cylindrical type tool tip with a teardrop end portion;
Figure 20 is a perspective view of a cylindrical type tool tip with a rectangular parallelepiped end portion;
Figure 21 is a perspective view of a cylindrical type tool tip with a widened rectangular parallelepiped end portion;
Figure 22 is a perspective view of a dual cylindrical type tool tip;
Figure 23 shows a side elevation view of an alternative embodiment of the present invention including a combination of the dental tool tip portion of the present invention and a photo-polymerization light curing apparatus, wherein the curing light communicates within the dental tool and through the light transmittable tip portion;
Figure 24 shows a side elevation cross sectional view of Figure 23 for the alternative embodiment of the present invention including a combination of the dental tool tip portion of the present invention and a photo-polymerization light curing apparatus, wherein the curing light communicates within the dental tool and through the light transmittable tip portion, wherein the tool tip portion and the photo-polymerization light curing apparatus are detachable adjacent to the distal tool tip portion;
Figure 25 shows a side elevation view of an alternative embodiment of the present invention including a combination of the dental tool tip portion of the present invention and a photo-polymerization light curing apparatus, wherein the curing light communicates within the dental tool and through the light transmittable tip portion;
Figure 26 shows a side elevation cross sectional view of Figure 25 for the alternative embodiment of the present invention including a combination of the dental tool tip portion of the present invention and a photo-polymerization light curing apparatus, wherein the curing light communicates within the dental tool and through the light transmittable tip portion, wherein the tool tip portion and the photo-polymerization light curing apparatus are detachable adjacent to the proximal tool portion;
Figure 27 shows a perspective use view of the combined dental tool tip portion of the present invention and the photo-polymerization light curing apparatus being either from Figures 23 or 25; and
Figure 28 shows a perspective use view of the separate dental tool tip portion of the present invention and the independently employed photo-polymerization light curing apparatus.

### REFERENCE NUMBERS IN DRAWINGS

50 Dental tool assembly
55 Dental tool assembly with integral photo curing light apparatus
56 Proximal portion of dental tool assembly 55
60 Gripping member of the dental tool assembly 50 or 55
61 Longitudinal axis of the gripping member 60
65 Distal tool end of the dental tool assembly 50 or 55
70 Opposing distal tool end of the dental tool assembly 50 or 55
75 Extended distal end
80 Opposing extended distal end
85 First portion
90 Opposing first portion
95 Second portion
100 Opposing second portion
101 Receiving cavity or bore for tip portion 105 in the second portions 95 or 100
102 Depth of receiving bore 101
103 Diameter of receiving bore 101
105 Tip portion
106 Diameter of the tip portion 105
110 Longitudinal axis of the tip portion 105
115 Hammer head type tip for the tip portion 105
120 Anvil type tip for the tip portion 105
125 Parallelepiped type tip for the tip portion 105
130 Cylindrical type tip for the tip portion 105
135 Cylindrical type tool tip with a semi spherical tip for the tip portion 105
140 Cylindrical type tool tip with a wedge end portion tip for the tip portion 105
145 Cylindrical type tool tip with a radius point conical end portion tip for the tip portion 105
150 Cylindrical type tool tip with a skewed wedge end portion tip for the tip portion 105
155 Cylindrical type tool tip with an arcuate segment end portion tip for the tip portion 105
160 Cylindrical type tool tip with a full spherical end portion tip for the tip portion 105
165 Cylindrical type tool tip with a teardrop end portion tip for the tip portion 105
170 Cylindrical type tool tip with a rectangular parallelepiped end portion tip for the tip portion 105
175 Cylindrical type tool tip with a widened rectangular parallelepiped end portion tip for the tip portion 105
180 Dual cylindrical type portion tip for the tip portion 105
185 Collet chuck
190 Inner sleeve of the collet chuck 185
195 Outer sleeve of the collet chuck 185
200 Detent of the collet chuck 185
205 Slip fit or radial clearance of tip 105 to receiving bore 101 on the second portions 95 or 100
210 Adhesive
215 Surface treatment
250 Photo curing light apparatus
251 Removable engagement of the dental tool assembly 55 and the photo-curing light 250
260 Light transmission or communication from the light apparatus 250
300 Patient
305 Mouth of patient
310 Prepared tooth with cavity of patient 300
315 Composite filler material
316 Porosity or voids in the composite material 315
317 Layers of the composite filler material 315 in the prepared cavity 310
320 Dentist

### DETAILED DESCRIPTION

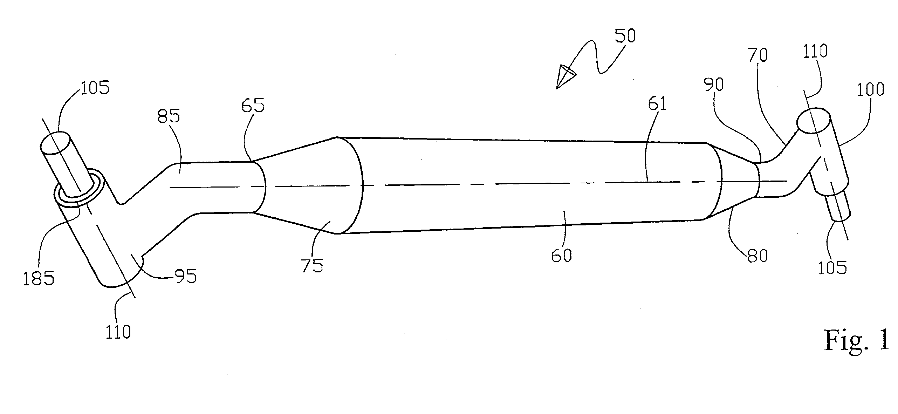

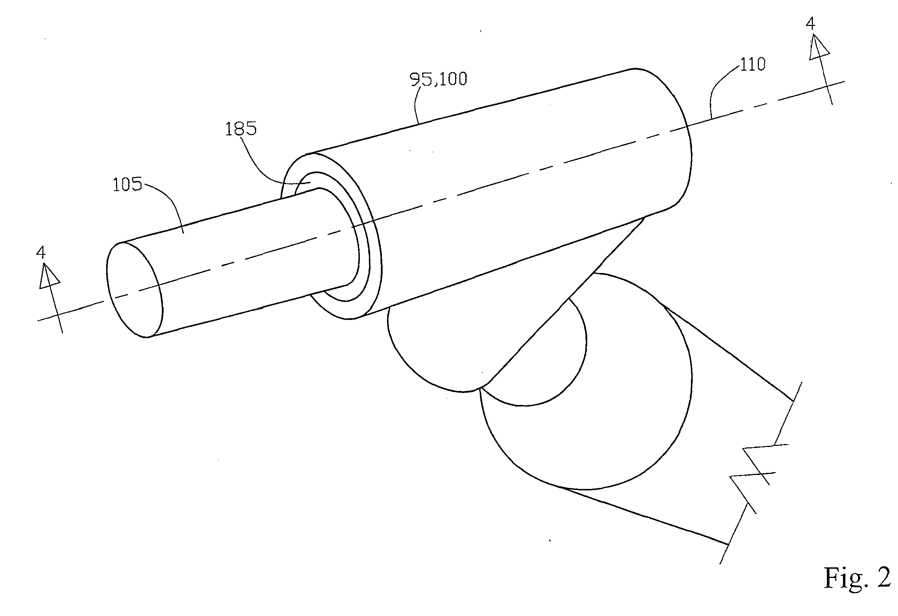

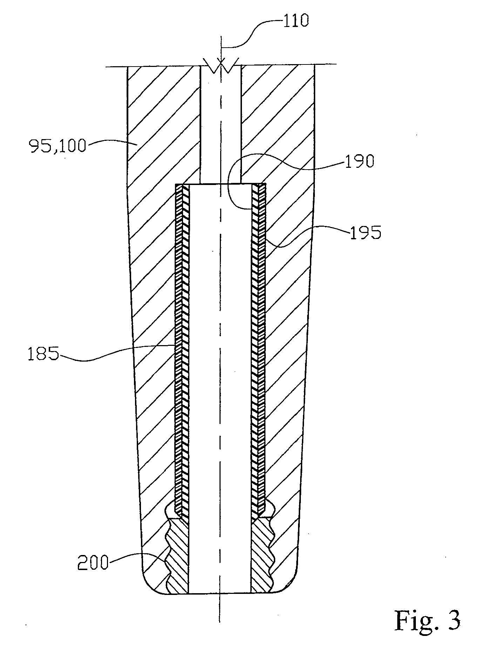

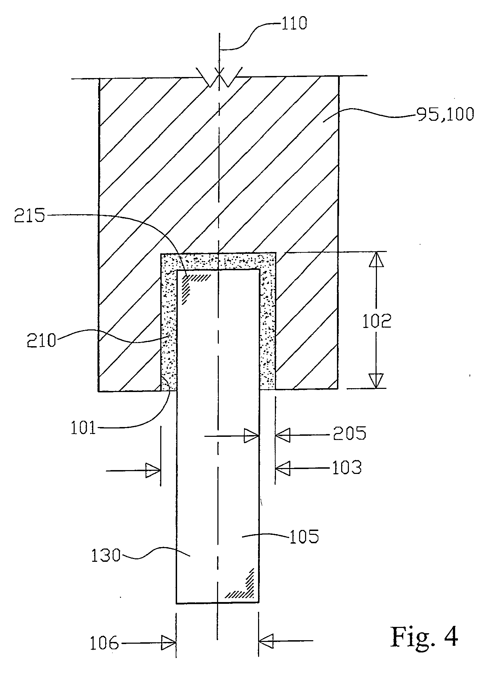

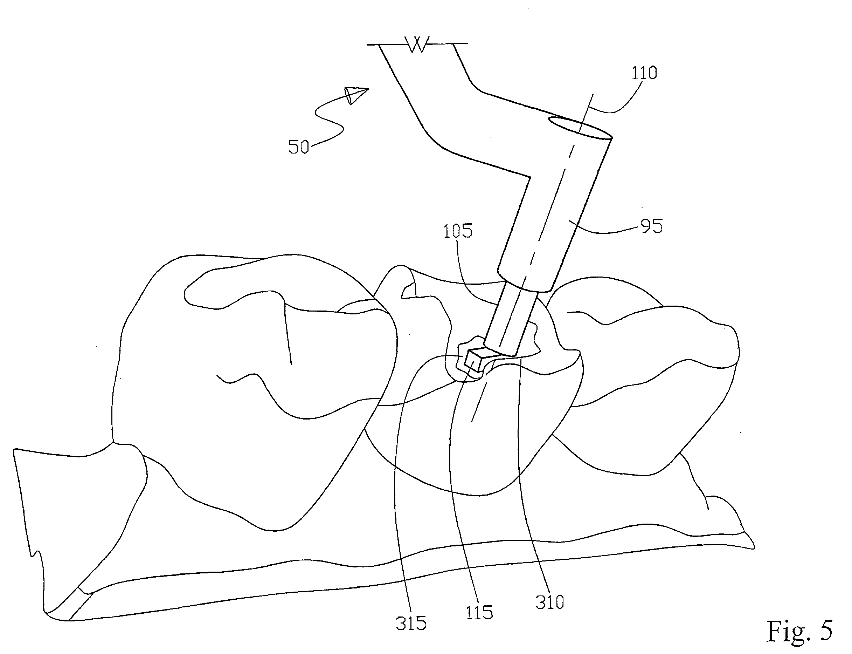

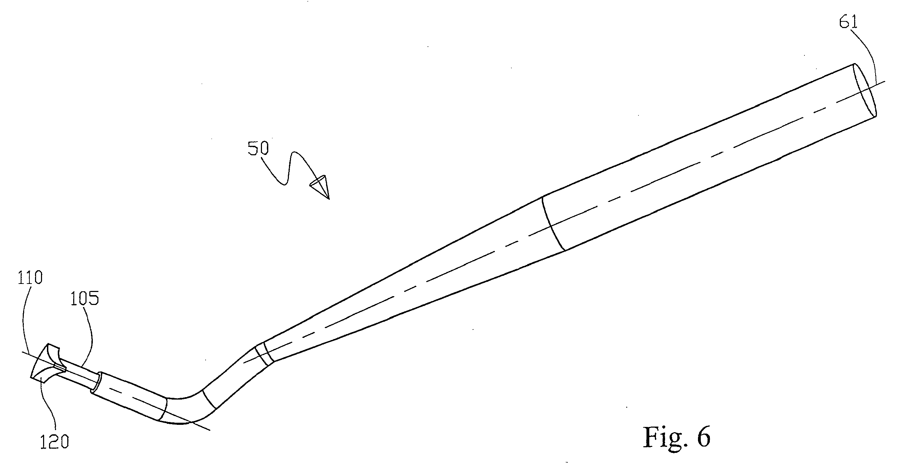

Starting with Figure 1 is a perspective view of the dental tool assembly 50 of the preferred embodiment of the present invention, next Figure 2 is an expanded detail view of the tool tip 105 of the tool assembly 50 of Figure 1, and Figure 3 is a cross sectional detail view of a dental tool collet chuck 185 for either the dental tool assembly 50 or 55. Continuing, Figure 4 is a cross sectional detail view 4-4 of Figure 2 being of the dental tool 50 or 55 and tip portion 105 adhesive interface 210, Figure 5 is a view of the dental tool assembly 50 in use with a hammer head 115 type tool tip 105 configuration, and Figure 6 is a perspective view of the dental tool 50 or 55 with an anvil type 120 tool tip 105 configuration.

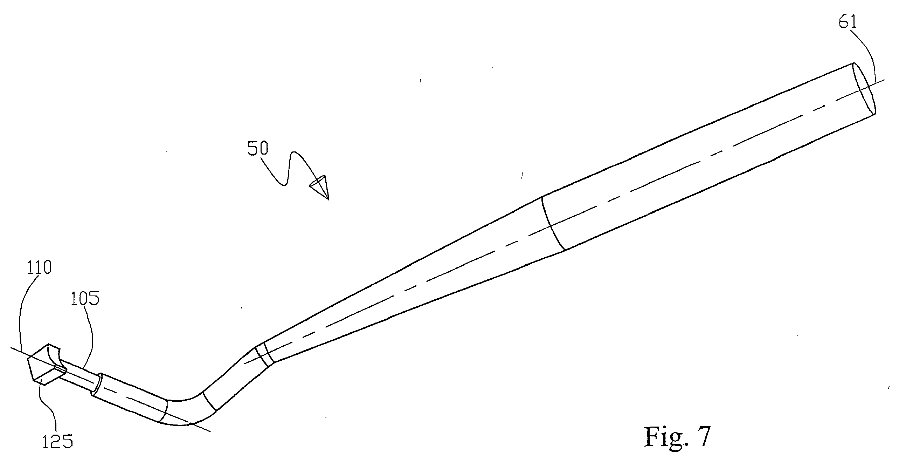

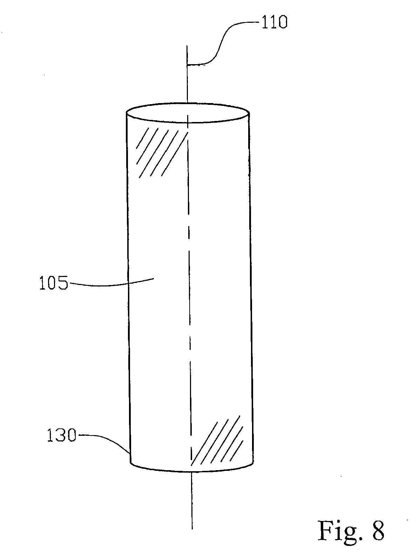

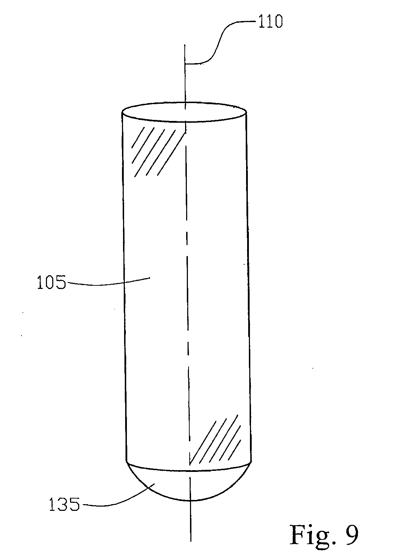

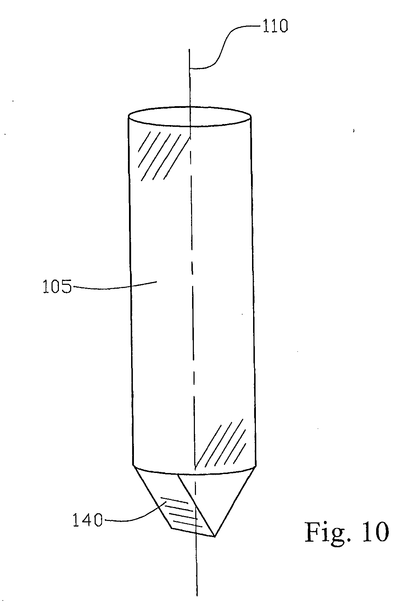

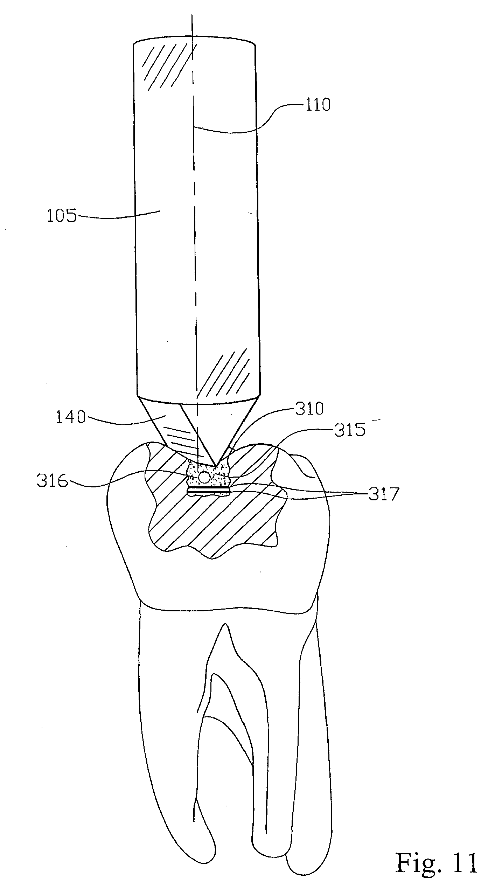

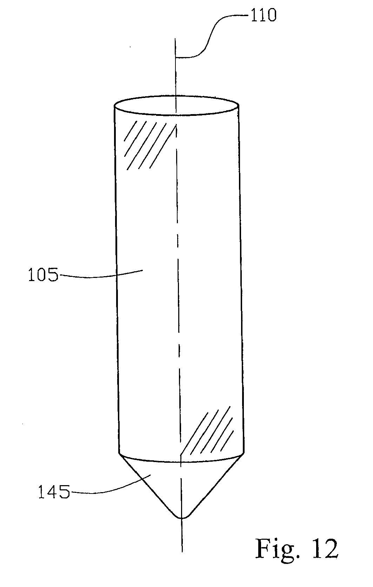

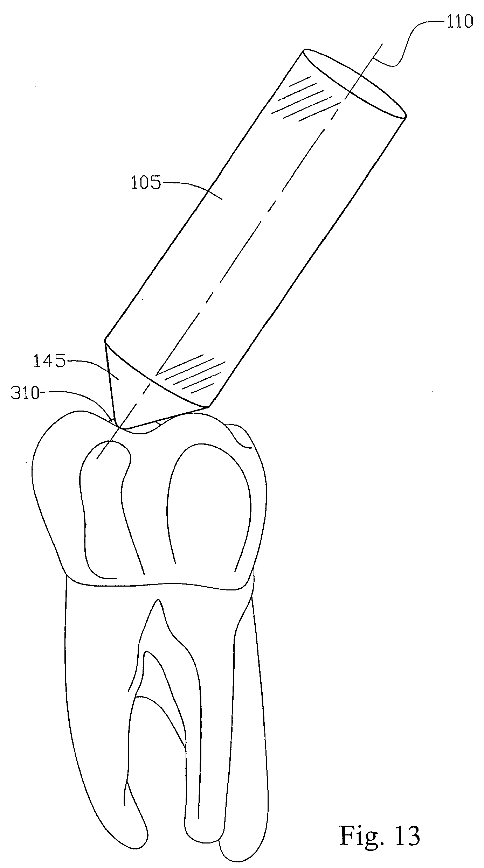

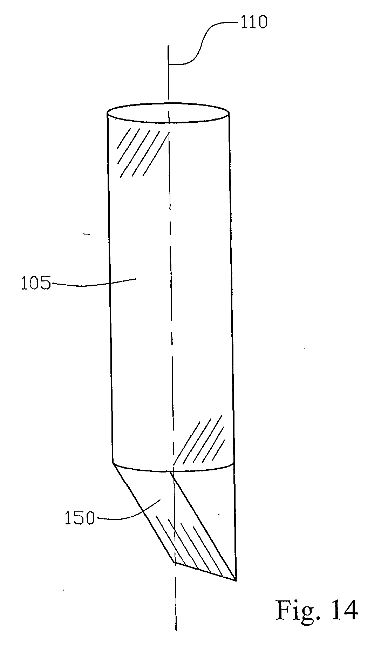

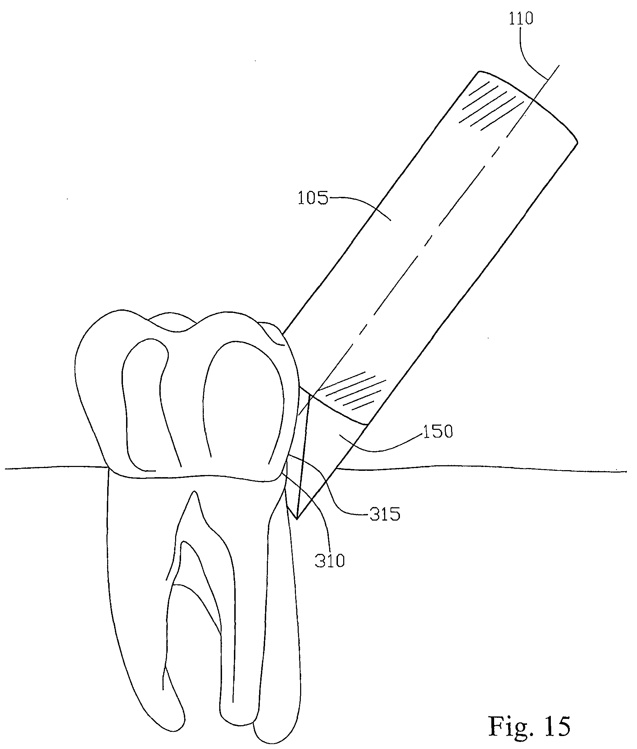

Further, Figure 7 is a perspective view of parallelepiped type 125 tool tip 105 configuration, Figure 8 is a perspective view of a cylindrical type 130 tool tip 105, and Figure 9 is a perspective view of a cylindrical type tool tip with a semi-spherical end 135 portion. Next, Figure 10 is a perspective view of a cylindrical type tool tip with a wedge end portion 140, Figure 11 is a perspective view of a cylindrical type tool tip with a wedge end portion 140 shown in use, wherein the prepared cavity 310 of the tooth is shown in cross section with the composite filler material 315, layers 317, and voids 316 or porosity 316 and Figure 12 is a perspective view of a cylindrical type tool tip with a radius point conical end portion 145. Continuing, Figure 13 is a perspective view of a cylindrical type tool tip with the radius point conical end portion 145 shown in use, Figure 14 is a perspective view of a cylindrical type tool tip with a skewed wedge end 150 portion, and Figure 15 is a perspective view of a cylindrical type tool tip with a skewed wedge end 150 portion shown in use for a class II-VI tooth restorations.

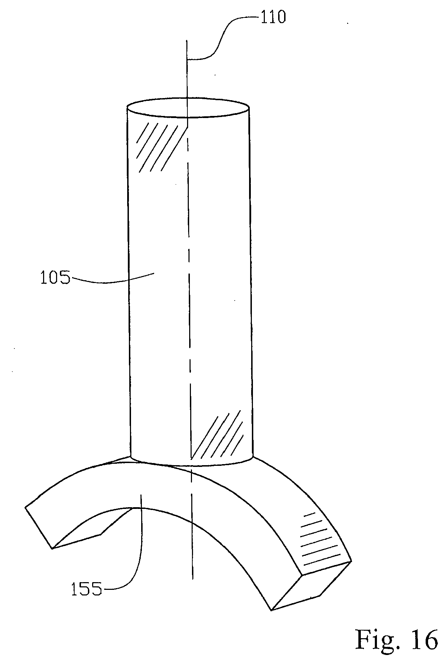

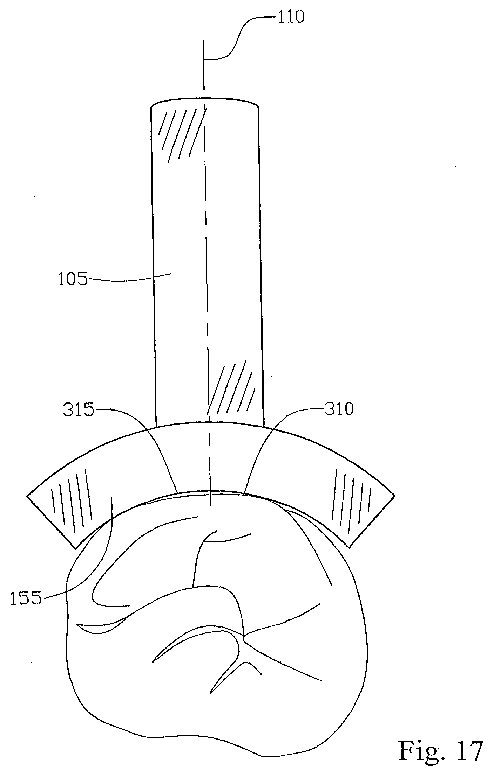

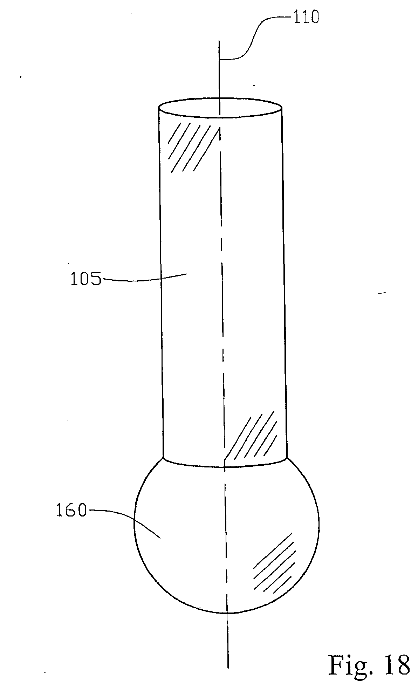

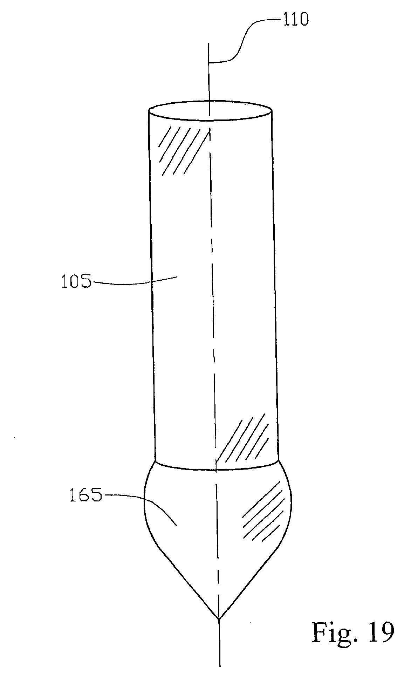

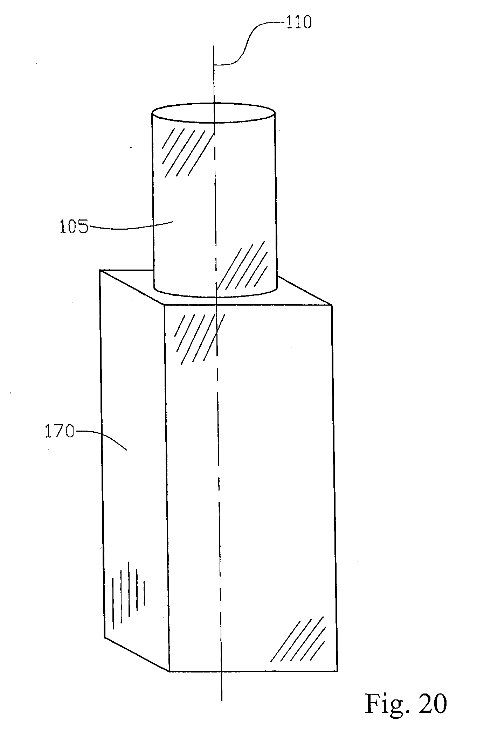

Moving onward, Figure 16 is a perspective view of a cylindrical type tool tip with an arcuate segment end 155 portion, Figure 17 is a perspective view of a cylindrical type tool tip with an arcuate segment end 155 portion shown in use for a class II-VI tooth restorations, and Figure 18 is a perspective view of a cylindrical type tool tip with a full-spherical end 160 portion. Further, Figure 19 is a perspective view of a cylindrical type tool tip with a teardrop end portion 165, Figure 20 is a perspective view of a cylindrical type tool tip with a rectangular parallelepiped end 170 portion, and

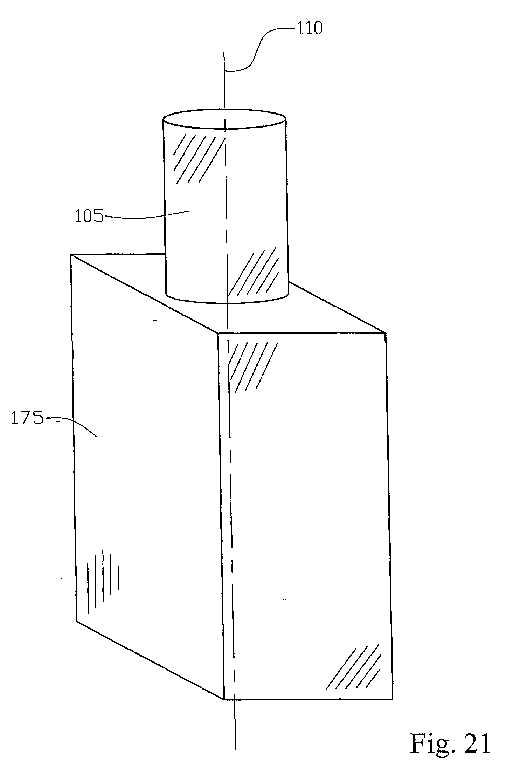

Figure 21 is a perspective view of a cylindrical type tool tip with a widened rectangular parallelepiped end 175 portion.

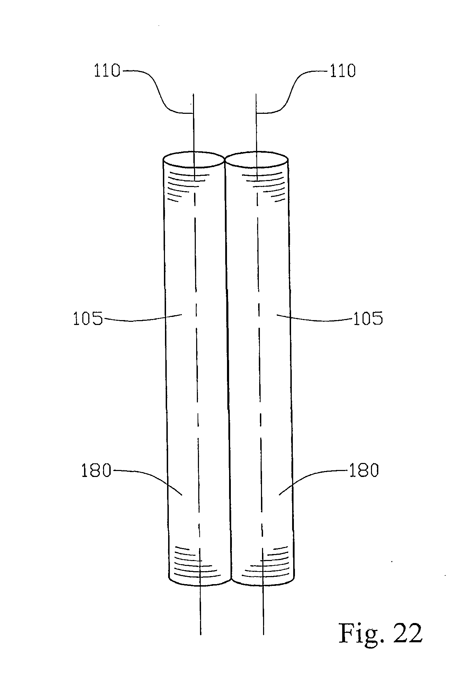

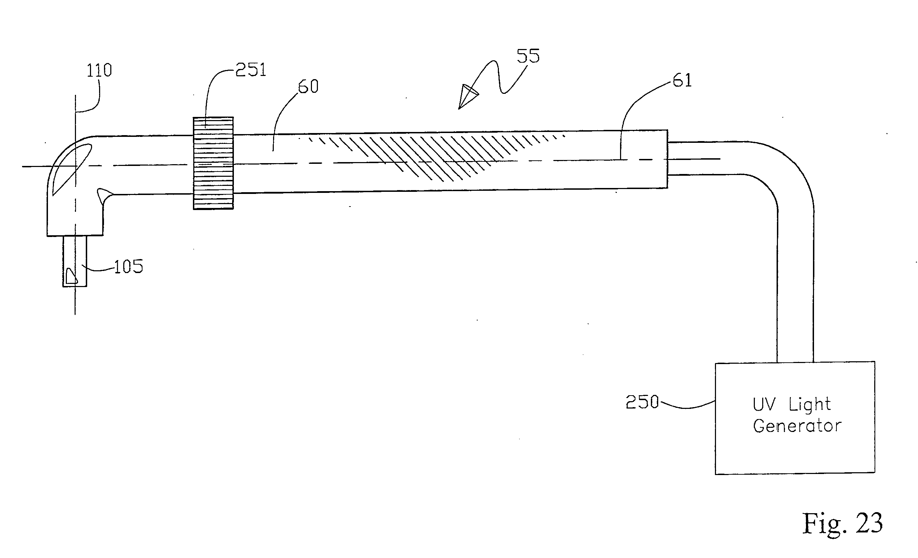

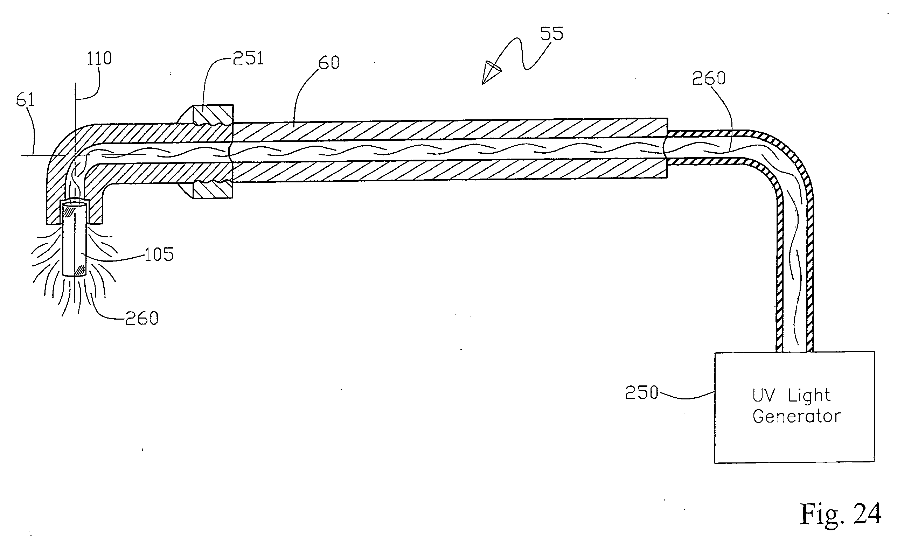

Continuing, Figure 22 is a perspective view of a dual cylindrical type tool tip 180 and Figure 23 shows a side elevation view of an alternative embodiment 55 of the present invention including a combination of the dental tool tip portion 105 of the present invention 50 and a photo-polymerization light curing apparatus 250, wherein the curing light communicates 260 within the dental tool 55 grip 60 and through the light transmittable tip portion 105. Next, Figure 24 shows a side elevation cross sectional view of Figure 23 for the alternative embodiment 55 of the present invention including a combination of the dental tool tip portion 105 of the present invention 50 and a photo-polymerization light curing apparatus 250, wherein the curing light communicates 260 within the dental tool 55 grip 60 and through the light transmittable tip portion 105, wherein the tool tip portion 105 and the photo-polymerization light curing apparatus 250 are detachable 251 adjacent to the distal tool tip portion 105.

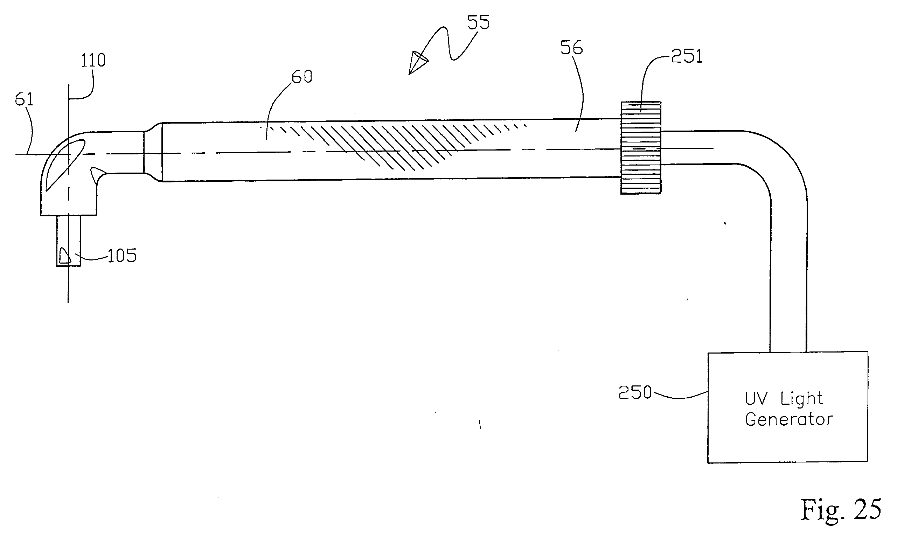

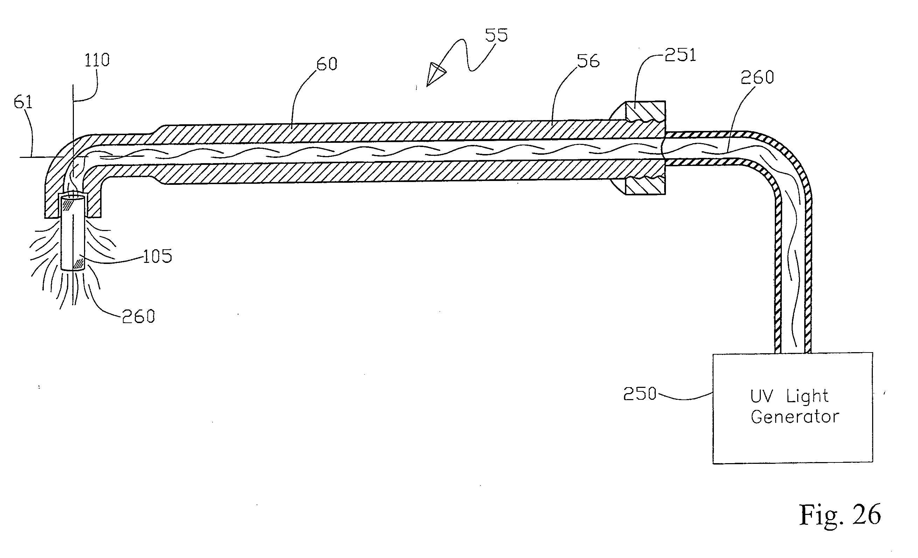

Further, Figure 25 shows a side elevation view of an alternative embodiment55 of the present invention including a combination of the dental tool tip portion 105 of the present invention 50 and a photo-polymerization light curing apparatus 250, wherein the curing light communicates 260 within the dental tool 55 grip 60 and through the light transmittable tip portion 105. Next, Figure 26 shows a side elevation cross sectional view of Figure 25 for the alternative embodiment 55 of the present invention including a combination of the dental tool tip portion 105 of the present invention 50 and a photo-polymerization light curing apparatus 250, wherein the curing light communicates 260 within the dental tool 50 grip 60 and through the light transmittable tip portion 105, wherein the tool tip portion 105 and the photo-polymerization light curing apparatus 250 are detachable 251 adjacent to the proximal tool portion 56.

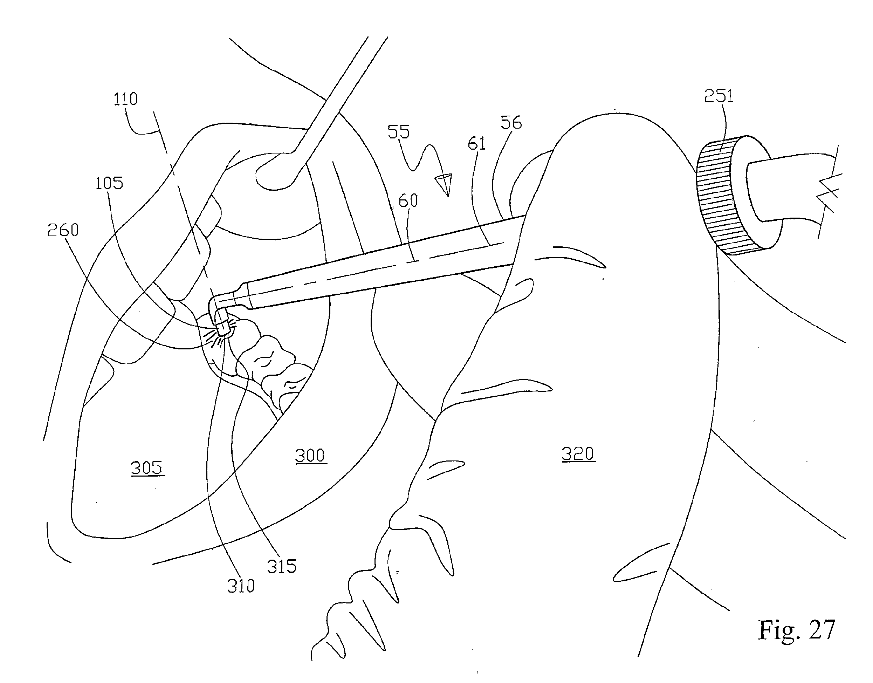

Continuing, Figure 27 shows a perspective use view of the combined dental tool 55 tip portion 105 of the present invention 50 and the photo-polymerization light curing apparatus 250 being either from Figures 23 or 25 and Figure 28 shows a perspective use view of the separate dental tool tip portion 105 of the present invention 50 and the independently employed photo-polymerization light curing apparatus 250.

The present invention provides a tool 50 or 55 that can be used for manipulating and compacting composite fill materials 315 in a cavity 310 of a tooth not only prior to the curing process but also during the actual curing process. The dental tool 50 is used with ultraviolet (light in the range of ten (10) to four hundred (400) nm) as well as visible light (light in the range of three hundred eighty (380) to seven hundred sixty (760) nm) photo curing operations generated from the photo-curing apparatus 250. The tool 50 of the present invention includes at least a portion of the tool 105 that is able to allow ultraviolet rays to pass 260 through without distortion. This allows the tool 50 to be used even while the photo-curing operation is occurring so that the fill material 315 can be evenly compacted to eliminate voids 316 during curing. The fill material 315 may shrink during the photo-curing process, thus causing voids 316 in the fill 315 that can lead to bacteria and other problems. The present invention 50 is able to minimize the occurrence of voids 316 by continuing to compact and manipulate the fill material 315 during the curing process while shrinkage may occur. Previous tools were unable to do this as the ultraviolet rays 260 would be distorted and reflected causing damage to the surrounding tissue.

The translucent tool tip portion 105 not only is able to transmit 260 the ultraviolet rays without distortion, it must also be of sufficient strength to be durable and hard to compact and manipulate the fill material 315 without shattering or causing damage to the patient 300. The tool tip portion 105 of the present invention 50 also has the ability to easily shed or not adhere to the composite fill material 315, that is, the composite fill material 315 does not stick to the tool 105 pulling the composite fill material 315 away from the prepared cavity 310 of the tooth. This further minimizes the occurrence of voids 316 in the cavity 310 since the fill material 315 will remain in place once it has been compacted and shaped.

The present invention 50, as set forth in the claims, is directed to dental tools that provide the characteristics, either individually or in combination with one another, of allowing the transmission 260 of visible and ultraviolet wavelengths, durability and strength so that the tool 105 is able to compact the fill material 315 to eliminate voids 316, and to properly shape the fill 315 material, and non-adhesion of the fill material 315 to the tool 105.

The tool 50 is formed from sapphire for the tip portion 105.

Sapphire is an anisotropic, rhombohedral structure of the crystalline form of aluminum oxide (Al₂O₃). It occurs naturally but is also able to be synthetically created on an industrial scale. It has a high degree of transmission within the ultraviolet and visible light spectrum while possessing a high degree of strength and toughness as well as chemical resistance and composite fill material does not adhere easily to sapphire. Sapphire is able to transmit wavelengths between two hundred (200) nm to seven hundred sixty (760) nm, and even up to five (5) µm without significant distortion. It also has a compressive strength of 2*10⁸kg/m² (20,000 kg/cm²), with a tensile strength of 0.7*10⁸kg/m² (7,000 kg/cm²), and a fracture toughness in the range of 2.4 - 4.5 MPA√m (Pascals per square root meters). Sapphire also has the characteristic of being slick, that is, most materials including composite fill materials 315 will not easily stick or adhere to it. It also has a high abrasion resistance so it will not easily scratch which could cause distortion or reflection of wavelengths.

This provides a high strength, hard, and durable tool 105 that is capable of allowing ultraviolet rays to transmit 260 through without distortion or reflection. This allows the tool 105 to be used during the photo-curing process so that voids 316 are minimized, the composite fill material 315 can be more precisely shaped-even with composite shrinkage during curing, and the 310 cavity filling process be more efficiently conducted so that the patient 300 spends less time undergoing the process and ending up with a better quality filling that minimizes the loss of structural integrity of the tooth from the filling and provides for an almost visually imperceptible filling. The ability of the tool 105 to be used during the photo-curing process to prevent voids 316 from occurring as the material 315 shrinks, as well as the ability of the tool 105 to shed the fill material 315 so that it remains in place in the cavity 310 increases the efficiency of the process. The sapphire tool is also useful prior to the photo-curing process in placing the fill material 315 in the cavity, compacting the fill material 315 and shaping the fill material 315 since the fill material 315 does not adhere easily to the sapphire tool 105 and the sapphire tool 105 has high strength and durability. The details and features of the tool 105 of the present invention is discussed in greater details below in the description of exemplary embodiments.

A preferred embodiment of the present invention is illustrated in Figures 1 - 22. An exemplary embodiment of the dental tool 50 is illustrated in Figure 1 for placing a fill material 315 in tooth cavity 310, manipulating that fill material 315 and compacting the fill material 315 before and during the curing operation as seen in use in Figures 5, 11, 13, 15, 17, 27, and 28. This particular tool 50 is intended to be used for use with a photo-curing application apparatus 250 such as ultraviolet, although other light sources can be used as well. The fill material 315 can be a composite or Ionomer fill material or any other type of fill material that can be cured through photo-polymerization. For descriptive terms only, the fill material 315 is referred to as composite or polymer materials, but it is to be understood that other photo-curable materials are included as well.

The dental tool 50 includes a central gripping member 60 with distal tool ends 65, 70. The central gripping member 60 can be formed of suitable materials, preferably a material that can be easily sterilized and that does not degrade under ultraviolet light. In the preferred embodiment 50, the central gripping member 60 is formed of a high strength plastic with knurled portions for ease of gripping. Alternatively, the gripping member 60 could be formed from stainless steel, aluminum or other suitable materials.

The dental tool 50, of this preferred embodiment, is illustrated with opposing distal tool ends 65, 70. It is to be expressly understood that the tool could also include a single tool end as well. The tool end 65 of this preferred embodiment includes an extended distal end 75 with a reduced diameter. This reduced diameter portion 75 includes a first portion 85 that extends outwardly along the longitudinal axis 61 of the gripping member 60 for an extended length then a second portion 95 that angles upwardly for another length. The lengths and angle of these two portions are determined by the particulars of the teeth in order to easily access the cavity 310 within a particular tooth while still allowing visibility to the cavity 310. It is to be expressly understood that other lengths, angles and configurations may be used as well within the scope of the invention as claimed.

Dental tool tip portions 105, discussed in greater detail below, are secured to the tool assembly 50. The tool tip portions 105 can be formed on the tool assembly 50, permanently affixed to the tool assembly 50, or removably attached to the tool assembly 50. In one preferred embodiment, a collet chuck 185, as seen in Figure 3, is affixed to the end of the tool end 75. The collet chuck 185 of this preferred embodiment enables the gripping member 60 to be used with a variety of dental tool tips 105 as well as replacement tips 105. Other fastening mechanisms may be used as well in lieu of the collect chuck 185, such as adhesive fasteners 210, as shown in Figure 4. It is also to be expressly understood that the tool assembly 50 or 55 may use permanently affixed dental tool tips 105 as well instead of a fastening mechanism. Collet chucks 185 are well known for securing tools and typically, as shown in Figure 3, include an inner sleeve 190 that is radially resilient so it will compress over the dental tool tip 105 as pressure is applied radially against it. An outer sleeve 195 having a radially tapered inner diameter extending axially down its length is slidable relative to the inner sleeve 190. As the inner sleeve 190 is moved upward inside the outer sleeve 195, the radial taper of the inner diameter of the outer sleeve 195 compresses the inner sleeve 190 over the dental tool tip 105. A detent 200 locks the sleeves 190 and 195 in place. The reverse operation will release the dental tool tip 105 from the collet chuck 185.

The opposing end 70 of the gripping member 60 similarly includes reduced diameter end portions 80, 90 that extend from the gripping member 60. These end portions may be identical to the end portions on the opposing end of the gripping member 60 or may be at differing lengths and angles to provide a different function. A collet chuck 185 may be affixed to the distal ends 65 and 70, or the tool tips 105 may be permanently affixed, as shown in Figure 4. For the permanent affixing, Figure 4 shows the tip 105 cylindrical portion 130 inserted into the second portions 95 and 100 into receiving bore 101 wherein a preferred radial clearance 205 of about 0.254mm (ten-thousandths (0.010) of an inch) and a depth 102 to diameter 103 ratio of at least one is preferred of the receiving bore 101 as determined from experimental testing. Noting that the tip 105 typical diameter 106 is in the range of about one (1) to four (4) mm, the preferred adhesive 210 is LOCTITE #M31CL medical grade epoxy with ISO certification 10993 or a suitable equivalent. As a further enhancement to the adhesive 210 shown in Figure 4, a surface treatment 215 of preferably Zirconia dust is applied to the diameter 106 prior to the adding of the adhesive 210 in the clearance or slip fit area 205. The slip fit or clearance 205 as a percentage of the tip portion 105 is determined as follows; with the preferred clearance of 0.254mm (0.010 inches) and a typical tip portion 105 diameter 106 being typically 2 mm (which equals 0.079 inches), thus 0.254mm (0.010 inches) divided by 1.981mm (0.078 inches) equals about twelve (12) percent, see Figure 4.

The dental tool tips 105 of the present invention are uniquely designed tools that provide a combination of high strength for performing the operations of filling, manipulating and compacting the composite fill material 315 being preferably 3M Filltek or equivalent within the prepared cavity 310 not only prior to the photo-curing operation but during the photo-curing operation as well. It is critical that the material 315 be properly compacted to eliminate voids 316 and air bubbles 316 within the fill material 315 to prevent problems from occurring later, see Figure 11. The dental tool tips 105 of the preferred embodiment 50 are formed from a translucent material that will transmit ultraviolet wavelengths without reflecting or redirecting the light rays 260. The tip 105 material must also be sufficiently durable and hard to enable the compacting and manipulation of the fill material 315. The dental tool tips 105 are formed from sapphire. The sapphire will enable the use of the dental tool 50 during the photo-curing operation without distorting or reflecting the ultraviolet or other light transmission 260 wavelengths. Further, the sapphire tool tip 105 is relatively hard and durable so that there is no danger of shattering under use and will sufficiently compact the fill material 315 when force is applied to eliminate any voids 316 or air bubbles 316. The sapphire tool tip 105 is also useful prior to the photo-curing process as the composite fill material 315 will not easily adhere to it. This minimizes voids 316 forming due to lifting or ripping of the fill material 315 from the cavity 310 due to adhesion of the filler material 315 to the tool tip 105.

The sapphire tool tip 105 can be formed into a cylindrical rod 130, see Figures 1, 2, and 8, so that it can be engaged into the collet chuck 185, as shown in Figure 3, or affixed with adhesive 210 as shown in Figure 4. The tip portion 105 can be further shaped into a particular shape, as discussed in greater detail below. Alternatively, the tool tip 105 can include an intermediate portion formed from a translucent plastic material that engages in the collet chuck 185 while a sapphire tool tip 105 is affixed to the intermediate portion.

The sapphire tool tip 105 can be formed into a variety of shapes being about its longitudinal axis 110 and configurations depending on the function to be accomplished and the tooth that is being filled. For example, as shown in Figures 8 through 22 different tool tips are illustrated. Particular shapes may be used for different teeth, such as differing shapes for the bicuspids, molars, etc. as well as the locations of the teeth and location of the cavity to be filled. It is to be expressly understood that other shapes and configurations may be included within the scope of the claimed inventions.

### METHOD OF USE

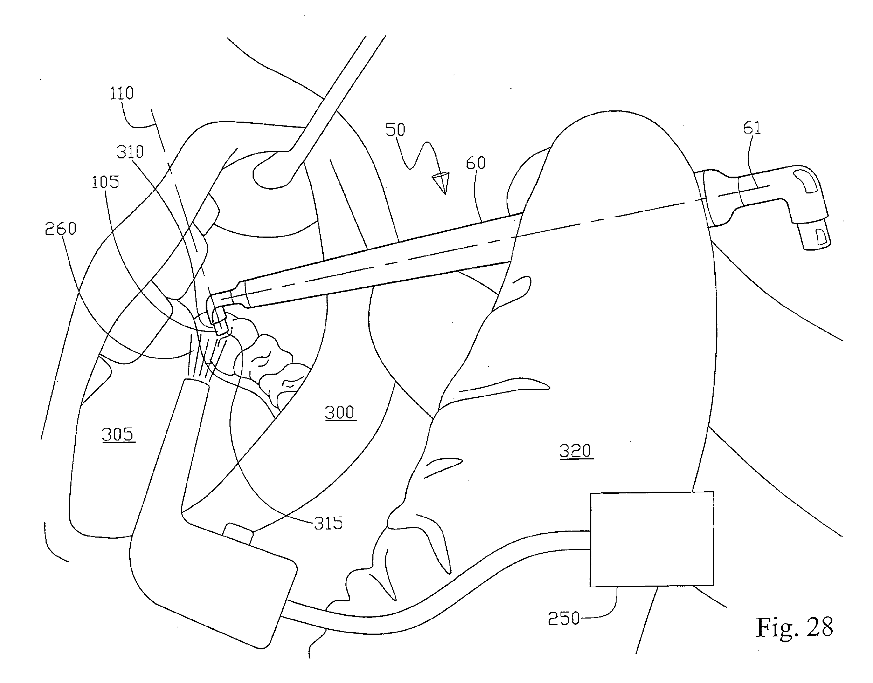

The tooth is prepared for filling by removing any decay and shaping the cavity 310 to receive the fill material 315. The fill material 315 is applied in thin (approximately one mm in thickness) layers 317 by depositing the material 315 in the cavity 310 and then manipulating it as shown in Figures 5, 11, 13, 15, 17, 27, and 28 with the dental tool 50 or 55. A light source 250 is then used to cure the fill material 315. The compaction and manipulation of the fill material 315 in the cavity 310 continues with the use of the dental tool 50 during the curing process, with the photo-curing light 250 as a separate item, see in particular Figure 28. The ultraviolet rays are transmitted 260 through the tool tip 105 with little or no distortion or reflection so no damage occurs to the surrounding tissue. The continued compaction and manipulation of the fill 315 during the curing process minimizes any voids 316 from occurring due to the shrinking from the curing of the material 315. This provides a much more efficient and reliable process than attempting to later fill voids 316 that have occurred.

The efficiency of the cavity filling process is increased by the use of the tool 50 or 55 and its unique combination of optical transmission 260 so that it can be used during the photo-curing process, the hardness of the tool tip 105 to compact the material 315 to prevent voids 316 from occurring and the ability to shed the fill material 315 so that the fill material 315 remains in place in the cavity 310. The ability of the tool tip 105 to be used during the photo-curing process allows the material 315 to be compacted and shaped as it shrinks to prevent voids 316 from occurring increases the efficiency over previous tools that could only be used before or independent of the photo-curing process. Voids 316 would occur with these tools as the material 315 shrinks during curing. These voids 316 would then have to be filled, thus increasing the time of the filling process. The hardness of the tool tip 105 also minimizes voids 316 as the material 315 is thoroughly compacted by the tool tip 105 before and during the curing process. The ability to shed the fill material 315 also decreases the time of the filling process as the material 315 does not easily cling to the tool tip 105 once it has been placed. Thus, the tool tip 105 of the present invention 55 or 55 increases the efficiency of the tooth cavity 310 filling process.

Looking in particular at Figures 23 through 27, as the alternative embodiment 55 is shown for the combined dental tool assembly 50 and the photo-curing light apparatus 250 further making this process of composite 315 photo-curing quicker, easier, and more efficient. As it is important to have the photo-curing light transmission 260 as close as possible to the composite material 315 and to minimize the "crowding" in the patient's 300 mouth 305 by having the light transmission 260 from light generating apparatus 250 travel therethrough the tool 55 itself or more specifically through the grip portion 60 allowing a one handed operation for the dentist 320 and more accurate photo-curing positioning. This results in minimizing any chance of voids 316 or porosity 316 in the cured composite 315 for a high quality filling with more structural integrity in the filled tooth, and in addition less time for the patient 300 to have tools in their mouth 305. Note that it is also preferable to have the light apparatus 250 be removably engagable 251 from the tool assembly 55 for sanitizing reasons, having the removable engagement 251 either near the tip 105, as shown in Figures 23 and 24, or near the grip 60, proximal end portion 56 as shown in Figures 25 and 26.

## Claims

1. A dental tool (50, 55) for use in filling a dental cavity, said dental tool (50, 55) comprising:
(a) a tool tip (105) for compacting and manipulating fill material within the dental cavity; and
(b) a gripping member (60), wherein
(c) said tool tip (105) is formed from a material wherein said material transmits wavelengths between 200 to 760 nm without reflecting or redirecting light rays, ;
**characterized in that**
(d) said tool tip (105) is formed from sapphire; and
(e) said tool tip (105) is fixed to said gripping member (60) by means of a collet chuck (185) or by means of a receiving cavity (101) disposed within a portion of said gripping member (60), wherein a portion of said tool tip (105) has a slip fit relationship with said receiving cavity (101) forming a clearance between said receiving cavity (101) and said tool tip portion wherein an adhesive (210) is disposed.

2. A dental tool (50, 55) according to claim 1, wherein said tool tip (105) has at least a portion that is formed from a material that allows the transmission through said portion of wavelengths between 200 to 400 nm without reflecting or redirecting light rays.

3. A dental tool (50, 55) according to claim 1, wherein said tool tip (105) has at least a portion that is formed from a material that allows the transmission through said portion of wavelengths between 380 to 760, nm without reflecting or redirecting light rays.

4. A dental tool (50, 55) according to claim 1, wherein said tool tip has a tensile strength of between 275 MPa and 400 MPa.

5. A dental tool (50, 55) according to claim 1, wherein said portion of said tool tip (105) is cylindrical and said slip fit is 12 percent of a diameter of said cylindrical tool tip portion, wherein said diameter is perpendicular to a longitudinal axis (110) of said tool tip (105).

6. A dental tool (50, 55) according to claim 5, further comprising a surface treatment of Zirconia disposed upon said tool tip portion within said slip fit to enhance said adhesive strength.

7. A dental tool (50, 55) according to claim 1, further comprising a photo-curing light apparatus (250) that is disposed to be in wavelength communication with said tool tip (105).

8. A dental tool (50, 55) according to claim 1, further comprising a photo-curing light apparatus (250), that is attached to said gripping member (60) opposite of said tool tip (105), wherein said gripping member (60) is sized and configured to accommodate wavelength communication as between said photo-curing light apparatus (250) and said tool tip (60).

9. A dental tool (50, 55) according to claim 8, wherein said attachment between said photo-curing apparatus (250) and said gripping member (60) is removably engagable.

10. A dental tool (50, 55) according to claim 1, wherein said portion of said tool tip (105) is cylindrical and said tool tip (105) further comprises an end portion of a specific geometry tip type (115,120,125,130,135,140,145,150,155, 160, 165, 170,175,180) to facilitate filling a corresponding specific dental cavity wherein said end portion with a specific geometry tip type (115,120,125, 30, 35, 40, 145, 150, 155, 160, 165, 170, 175, 180) is selected from the group consisting essentially of partial spheres, wedges, frustroconical shapes, arcuate segments, rectangular parallelepipeds, and cylinders.

## Patentansprüche

1. Zahnarztwerkzeug (50, 55) zur Verwendung beim Füllen einer Zahnhöhle, wobei das Zahnarztwerkzeug (50, 55) umfasst:
(a) eine Werkzeugspitze (105) zum Verdichten und Manipulieren des Verfüllmaterials innerhalb der Zahnhöhle; und
(b) ein Greifelement (60), wobei
(c) die Werkzeugspitze (105) aus einem Material gebildet ist, wobei das Material Wellenlängen zwischen 200 bis 760 nm sendet, ohne Lichtstrahlen zu reflektieren oder umzulenken;
**dadurch gekennzeichnet, dass**
(d) die Werkzeugspitze (105) aus Saphir gebildet ist; und
(e) die Werkzeugspitze (105) an dem Greifelement (60) mittels einer Spannzange (185) oder mittels eines aufnehmenden Hohlraums (101), der innerhalb eines Abschnitts des Greifelements (60) angeordnet ist, befestigt ist, wobei ein Abschnitt der Werkzeugspitze (105) eine Gleitsitzbeziehung mit dem aufnehmenden Hohlraum (101) aufweist, die einen Abstand zwischen dem aufnehmenden Hohlraum (101) und dem Werkzeugspitzenabschnitt bildet, in dem ein Klebstoff (210) angeordnet ist.

2. Zahnarztwerkzeug (50, 55) nach Anspruch 1, wobei die Werkzeugspitze (105) mindestens einen Abschnitt aufweist, der aus einem Material gebildet ist, das die Übertragung durch den Abschnitt von Wellenlängen zwischen 200 bis 400 nm ermöglicht, ohne Lichtstrahlen zu reflektieren oder umzulenken.

3. Zahnarztwerkzeug (50, 55) nach Anspruch 1, wobei die Werkzeugspitze (105) mindestens einen Abschnitt aufweist, der aus einem Material gebildet ist, das die Übertragung durch den Abschnitt von Wellenlängen zwischen 380 bis 760 nm ermöglicht, ohne Lichtstrahlen zu reflektieren oder umzulenken.

4. Zahnarztwerkzeug (50, 55) nach Anspruch 1, wobei die Werkzeugspitze eine Zugfestigkeit zwischen 275 MPa und 400 MPa aufweist.

5. Zahnarztwerkzeug (50, 55) nach Anspruch 1, wobei der Abschnitt der Werkzeugspitze (105) zylindrisch ist und der Gleitsitz 12 Prozent eines Durchmessers des zylindrischen Werkzeugspitzenabschnitts beträgt, wobei der Durchmesser zu einer Längsachse (110) von der Werkzeugspitze (105) senkrecht ist.

6. Zahnarztwerkzeug (50, 55) nach Anspruch 5, weiter umfassend eine Oberflächenbehandlung aus Zirkondioxid, das auf dem Werkzeugspitzenabschnitt innerhalb des Gleitsitzes angeordnet ist, um die Haftfestigkeit zu verbessern.

7. Zahnarztwerkzeug (50, 55) nach Anspruch 1, weiter umfassend eine Photohärtungslichtvorrichtung (250), die derart angeordnet ist, dass sie in Wellenlängenkommunikation mit der Werkzeugspitze (105) ist.

8. Zahnarztwerkzeug (50, 55) nach Anspruch 1, weiter umfassend eine Photohärtungslichtvorrichtung (250), die an dem Greifelement (60) gegenüber der Werkzeugspitze (105) befestigt ist, wobei das Greifelement (60) dimensioniert und konfiguriert ist, Wellenlängenkommunikation als zwischen der Photohärtungslichtvorrichtung (250) und der Werkzeugspitze (60) aufzunehmen.

9. Zahnarztwerkzeug (50, 55) nach Anspruch 8, wobei die Befestigung zwischen der Photohärtungslichtvorrichtung (250) und dem Greifelement (60) entfernbar in Eingriff zu bringen ist.

10. Zahnarztwerkzeug (50, 55) nach Anspruch 1, wobei der Abschnitt der Werkzeugspitze (105) zylindrisch ist und die Werkzeugspitze (105) weiter einen Endabschnitt eines Spitzentyps mit spezifischer Geometrie (115, 120, 125, 130, 135, 140, 145, 150, 155, 160, 165, 170, 175, 180) umfasst, um ein Füllen einer entsprechenden spezifischen Zahnhöhle zu erleichtern, wobei der Endabschnitt mit einem Spitzentyp mit spezifischer Geometrie (115, 120, 125, 130, 135, 140, 145, 150, 155, 160, 165, 170, 175, 180) aus der Gruppe ausgewählt ist, die im Wesentlichen aus partiellen Sphären, Keilen, kegelstumpfförmigen Formen, bogenförmigen Segmenten, Quadern und Zylindern besteht.

## Revendications

1. Outil dentaire (50, 55) destiné à une utilisation dans le remplissage d'une cavité dentaire, ledit outil dentaire (50, 55), comprenant :
(a) une pointe d'outil (105) pour le compactage et la manipulation de matériau de remplissage dans la cavité dentaire ; et
(b) un élément de préhension (60), où
(c) ladite pointe d'outil (105) est formée à partir d'un matériau où ledit matériau transmet des longueurs d'onde de 200 à 760 nm sans réfléchir ou rediriger les rayons lumineux ;
**caractérisé en ce que**
(d) ladite pointe d'outil (105) est formée à partir de saphir ; et
(e) ladite pointe d'outil (105) est fixée audit élément de préhension (60) au moyen d'une pince de serrage (185) ou au moyen d'une cavité de réception (101) disposée à l'intérieur d'une partie dudit élément de préhension (60), où une partie de ladite pointe d'outil (105) présente une relation d'ajustement glissant avec ladite cavité de réception (101) formant un espace entre ladite cavité de réception (101) et ladite partie d'outil dans le un adhésif (210) est disposé.

2. Outil dentaire (50, 55) selon la revendication 1, dans lequel ladite pointe d'outil (105) comporte au moins une partie qui est formée à partir d'un matériau qui permet la transmission à travers ladite partie de longueurs d'onde comprises entre 200 et 400 nm, sans réflexion ou redirection des rayons lumineux.

3. Outil dentaire (50, 55) selon la revendication 1, dans lequel ladite pointe d'outil (105) comporte au moins une partie qui est formée à partir d'un matériau qui permet la transmission à travers ladite partie de longueurs d'onde comprises entre 380 et 760 nm, sans réflexion ou redirection des rayons lumineux.

4. Outil dentaire (50, 55) selon la revendication 1, dans lequel ladite pointe d'outil a une résistance à la traction comprise entre 275 MPa et 400 MPa.

5. Outil dentaire (50, 55) selon la revendication 1, dans lequel ladite partie de ladite pointe de l'outil (105) est cylindrique et ledit ajustement glissant représente 12 pour cent d'un diamètre de ladite partie de pointe d'outil cylindrique, où ledit diamètre est perpendiculaire à un axe longitudinal (110) de ladite pointe d'outil (105).

6. Outil dentaire (50,55) selon la revendication 5, comprenant en outre un traitement de surface en zircone disposée sur ladite partie de pointe d'outil dans ledit ajustement glissant pour améliorer ledit pouvoir d'adhérence.

7. Outil dentaire (50, 55) selon la revendication 1, comprenant en outre un appareil de photoplymérisation (250) qui est disposé de manière à être en communication à longueur d'onde avec ladite pointe d'outil (105).

8. Outil dentaire (50, 55) selon la revendication 1, comprenant en outre un appareil de photopolymérisation (250) qui est fixé audit élément de préhension (60) à l'opposé de ladite pointe d'outil (105), dans lequel ledit élément de préhension (60) est dimensionné et configuré pour recevoir la communication à longueur d'onde entre ledit appareil de photoplymérisation (250) et ladite pointe d'outil (60).

9. Outil dentaire (50, 55) selon la revendication 8, dans lequel ladite fixation entre ledit appareil de photopolymérisation (250) et ledit élément de préhension (60) est engageable de manière amovible.

10. Outil dentaire (50, 55) selon la revendication 1, dans lequel ladite partie de ladite pointe d'outil (105) est cylindrique et ladite pointe d'outil (105) comprend en outre une partie d'extrémité d'un type de pointe à géométrie spécifique (115, 120, 125, 130, 135, 140, 145, 150, 155, 160, 165, 170, 175, 180) pour faciliter le remplissage d'une cavité dentaire spécifique correspondante, où ladite partie d'extrémité avec un type de pointe à géométrie spécifique (115, 120, 125, 130, 135 , 140, 145, 150, 155, 160, 165, 170, 175, 180) est choisie dans le groupe constitué essentiellement de sphères partielles, de coins, de formes tronconiques, de segments arqués, de parallélépipèdes rectangles et de cylindres.
